# NEUE EUROPÄISCHE PATENTSCHRIFT

(11) **EP 0 210 388 B2**
(45) Veröffentlichungstag und Bekanntmachung des Hinweises auf die Entscheidung über den Einspruch: **22.02.1995**
(45) Hinweis auf die Patenterteilung: 30.05.1990
(21) Anmeldenummer: 86107777.4
(22) Anmeldetag: 07.06.1986
(51) Int. Cl.: F16C 13/00

(54) **Durchbiegungssteuerbare und beheizbare Walze**
Deflexion-controllable and heatable roll
Cylindre chauffé à flexion compensée

(30) Priorität: 23.07.1985 DE 3526283
(43) Veröffentlichungstag der Anmeldung: 04.02.1987
(73) Patentinhaber: Sulzer Papertec Krefeld GmbH, 47803 Krefeld (DE)
(72) Erfinder: Pav, Josef, Dr., D-4150 Krefeld (DE); Wenzel, Reinhard, D-4150 Krefeld (DE); Rauf, Richard, D-4150 Krefeld (DE)
(74) Vertreter: Knoblauch, Ulrich, Dr.-Ing.

(56) Entgegenhaltungen:
- EP-A- 0 179 730
- DE-A- 2 420 324
- DE-A- 2 503 051
- DE-A- 2 719 949
- DE-A- 2 722 912
- DE-A- 2 920 528
- GB-A- 1 059 366
- GB-A- 2 041 158
- GB-A- 2 102 099
- GB-A- 2 143 302
- US-A- 3 587 152
- US-B- 4 167 964
- Druckschrift "Küsters schwimmende Walze", 1974
- Dubbel "Taschenbuch für den Maschinenbau", Bd. 1, 1C. Aufl., 1952
- Dichtungskatalog Fa. C. Haacke & Söhne
- Prospekt Fa. Garlock
- Kraftfahrtechnisches Taschenbuch, 19. Aufl., 1984
- G. Niemann: Maschinenelemente, Bd. I, 2. Aufl., S. 342
- Ehrhard Mayer: Axiale Gleichringdichtungen, VDI-Verlag, 7. Auflage, S. 282
- Prospekt, FAG KUGELFISCHER, NR. 81115, März 1985, S. 21, TAB. 18
- Pittroff, "Wälzlager in den Grenzgebieten ihrer Anwendung", Maschinenbautechnik, 17 (1968), Heft 10, Seite 550 bis 554
- Meyer, E., "Berechnung und Konstruktion von axialen Gleitringdichtungen" in: Konstruktion 20 (1968), Seite 213 bis 219
- Eschmann et. al, "Die Wälzlagerpraxis", 2. Auflage, München, Wien, 1978, Seiten 217/218 und 236/237

## Beschreibung

Die Erfindung bezieht sich auf eine durchbiegungssteuerbare und beheizbare Walze nach dem Oberbegriff des Anspruchs 1.

Eine solche Walze ist aus dem Prospekt "Küsters schwimmende Walze" 1974 bekannt.

Bei einer weiteren bekannten Walze dieser Art (DE-A-2420 324) weist die Lagervorrichtung eine Reihe von Lagerelementen auf, die mit Hilfe eines zwischen Lagerelement und Träger vorgesehenen Druckgebers gegen den Innenumfang des Walzenmantels gedrückt werden. Die Druckräume der Druckgeber sind über Drosselkanäle mit stirnseitig vorgesehenen Lagertaschen verbunden und werden mit einer unter Druck stehenden Arbeitsflüssigkeit versorgt. Auf diese Weise ist eine Durchbiegungssteuerung der Walze möglich. Die Arbeitsflüssigkeit wird mit Hilfe einer Heizvorrichtung derart beheizt, daß sie eine vorgegebene Temperatur im Behälter hat. Da die Arbeitsflüssigkeit in der Lagertasche und im Lagerspalt mit dem Walzenmantel in Berührung kommt, wird dieser beheizt. Da im Lagerspalt eine recht gute Wärmeübertragung stattfindet, lassen sich verhältnismäßig hohe Walzentemperaturen erzielen. Die beheizte Arbeitsflüssigkeit kann auch noch an anderen Stellen mit dem Walzenmantel in Berührung gebracht werden, beispielsweise durch ein Zufuhrvorrichtung auf der den Lagerelementen gegenüberliegenden Seite des Trägers. Die Wälzlager schließen den Innenraum des Walzenmantels ab und werden daher durch die Arbeitsflüssigkeit geschmiert.

Aus der nicht-vorveröffentlichten, FR, GB und SE benennenden EP-A-0 179 730 ist eine Walze der eingangs genannten Art zu entnehmen, bei der Schmiermittel für die Wälzlager getrennt von der beheizten Arbeitsflüssigkeit zugeführt wird. Zwischen Wälzlager und Walzeninnenraum befindet sich eine Isolierkammer, die eine Überhitzung des Schmiermittels in den Wälzlagern durch die Temperatur des Arbeitsmittels verhindern soll. Das Isolieröl in dieser Isolierkammer wird entweder vom Schmiermittel über das Wälzlager oder von der Arbeitsflüssigkeit aus dem Mantelinnenraum geliefert. Im letztgenannten Fall ist zwischen Isolierkammer und Wälzlager eine Dichtung angeordnet, die zum Isolierraum hin abdichtet.

Der Erfindung liegt die Aufgabe zugrunde, eine durchbiegungssteuerbare und beheizbare Walze der eingangs beschriebenen Art anzugeben, bei der es möglich ist, noch größere Wärmemengen auf den Walzenmantel zu übertragen bzw. diesem eine noch höhere Betriebstemperatur zu geben.

Diese Aufgabe wird erfindungsgemäß durch die Merkmale des Anspruchs 1 gelöst.

Die neue Konstruktion beruht auf der Überlegung, daß zahlreiche Arbeitsflüssigkeiten, hauptsächlich Thermalöle, weit über die üblichen Temperaturen der Hydrauliköle hinaus erhitzt werden können, ohne ihre hydraulischen Eigenschaften wie sie für die Bildung eines Druckpolsters in der hydrostatischen Lagervorrichtung und gegebenenfalls für die Bildung einer ausreichenden Flüssigkeitsschicht im Lagerspalt zwischen Lagerelement und Walzenmantel erforderlich sind, zu verlieren, dabei aber die Viskosität und Schmierfähigkeit, wie sie zur Schmierung eines Wälzlagers erforderlich ist, einbüßen. Da die Wälzlager nicht mehr durch die beheizte Arbeitsflüssigkeit sondern durch ein getrennt zugeführtes Schmiermittel geschmiert werden, ist die Grenztemperatur der Arbeitsflüssigkeit erheblich nach oben verschoben. Infolgedessen kann eine größere Wärmemengen als bisher auf den Walzenmantel übertragen werden bzw. dieser eine höhe Temperature erhalten. Durch die Abdichtung nach beiden Seiten hin ist sichergestellt, daß sich die beiden Medien nicht vermischen. Die Temperatur der beheizten Arbeitsflüssigkeit wird durch das kühlere Schmiermittel nicht störend beeinflußt. Außerdem ändern sich die Daten der Spezifikationen der beiden Medien nicht.

Das über den Leckkanal austretende Medium kann dann entweder durch Separation aufbereitet oder als Abfall betrachtet werden, da es sich bei guter Abdichtung nur um minimale Mengen, z.B. einige Tropfen, handelt.

Im einfachsten Fall besteht das Schmiermittel aus der gleichen Flüssigkeit wie die Arbeitsflüssigkeit ist aber unbeheizt.

Bessere Arbeitsergebnisse erzielt man jedoch, wenn für Arbeitsflüssigkeit und Schmiermittel unterschiedliche Medien gewählt werden. In diesem Fall kann ein speziell auf die Schmierung und nicht auf die für die hydrostatische Lagerung erforderlichen hydraulischen Eigenschaften und die Hocherhitzung abgestimmtes Schmiermittel verwendet werden, während die Arbeitsflüssigkeit speziell bezüglich ihrer thermischen und hydraulischen Eigenschaften ausgewählt wird. Insbesondere kann man sehr hohe Walzentemperaturen erzielen, wenn die Arbeitsflüssigkeit aus einem auf über 250°C, vorzugsweise über 300°C erhitzbaren Thermalöl besteht. Und als Schmiermittel empfiehlt sich ein Getriebeöl, wie es zu Schmierzwecken allgemein bewährt ist.

Vorzugsweise sind die Wälzlager in einem Schmiermittel-Kreislauf angeordnet. Den Walzlagern wird daher kontinuierlich neues Schmiermittel zugeführt. Es besteht dann keine Gefahr, daß das Schmiermittel einer übermäßigen Erwärmung vom Walzenmantel über das Wälzlager ausgesetzt ist.

Noch günstiger ist es, wenn der Schmiermittel-Kreislauf eine Kühlvorrichtung aufweist. Die im Wälzlager aufgenommene Wärme kann da jeweils wieder abgeführt werden.

Bei einer bevorzugten Ausführungsform ist dafür gesorgt, daß sich jedes Wälzlager zwischen Ringräumen befindet, die auf ihren dem Wälzlager abgewandten Seiten je durch eine Dichtung begrenzt sind, und daß der eine Ringraum mit einem Vorlaufkanal und der andere Ringraum mit einem Rücklaufkanal für das Schmiermittel verbunden ist. Das Wälzlager wird daher in einer vorgegebenen Richtung vom Schmiermittel durchströmt.

Zumindest ein Teil der Vor-, Rück- und Leckkanäle kann im Träger vorgesehen sein. Da die Lage dieser Kanäle frei gewählt werden kann, läßt sich praktisch immer der Platz hierfür finden.

Günstig ist es ferner, wennn die Leckkanäle im Mantel angeordnet und deren Mündungen außen von einem Auffanggehäuse umgeben sind. Durch die in den Leckkanälen auftretende Fliehkraft erfolgt eine Abförderung aus dem Trennraum. Aus dem Auffanggehäuse läßt sich das Medium leicht abführen.

Wenn das Auffanggehäuse mit einem mit dem Walzenmantel umlaufenden Teil nahe der Stirnfläche einen Spalt bildet und diesem ein Spritzring vorgeschaltet ist, ergibt sich eine besonders einfache Abdichtung.

Zweckmäßigerweise ist die dem Mantelinnenraum benachbarte Dichtung durch eine stirnseitig abdichtende Gleitringdichtung gebildet ist. Solche Gleitringdichtungen lassen sich aus festerem und temperaturbeständigerem Material herstellen als die üblichen Radialdichtungen.

Auch die zweite Dichtung zwischen Mantelinnenraum und Wälzlager kann durch eine solche stirnseitig abdichtende Gleitringdichtung gebildet sein.

Besonders günstig ist es, wenn ein erster Stützring unter Zwischenschaltung mindestens eines Dichtrings am drehfesten Teil und ein zweiter Stützring unter Zwischenschaltung mindestens eines Dichtringes am Mantel montiert ist und wenn ein Laufring in Axialrichtung durch Federkraft belastet und mit einer stirnseitigen Dichtfläche gegen den einen Stützring gehalten ist sowie am Umfang unter Zwischenschaltung mindestens eines Dichtringes mit dem zweiten Stützring zusammenwirkt und mit diesem auf Drehmitnahme gekuppelt ist.

In weiterer Ausgestaltung ist dafür gesorgt, daß der mit der stirnseitigen Dichtfläche des Laufringes zusammenwirkende Stützring zwischen zwei Dichtringen eine Ringnut aufweist, die einerseits über mindestens eine Bohrung in Stützring mit dem Trennraum und andererseits mit dem Leckkanal in Verbindung steht. Über den Stützring wird hierbei auf einfache Weise die Verbindung zwischen Trennraum und Leckkanal hergestellt.

Die Erfindung wird nachstehend anhand eines in der Zeichnung dargestellten, bevorzugten Ausführungsbeispiels näher erläutert.

Es zeigen:
Fig. 1 einen Längsschnitt durch einen Teil einer erfindungsgemäßen Walze mit Radialdichtungen,
Fig. 2 einen Querschnitt längs der Linie A-A der Fig. 1,
Fig. 3 einen Längsschnitt durch eine abgewandelte Ausführungsform mit zwei Gleitringdichtungen,
Fig. 4 eine dritte Ausführungsform mit radial verschiebbaren Wälzlager und
Fig. 5 eine vierte Ausführungsform mit schwimmend gelagertem Walzenmantel.

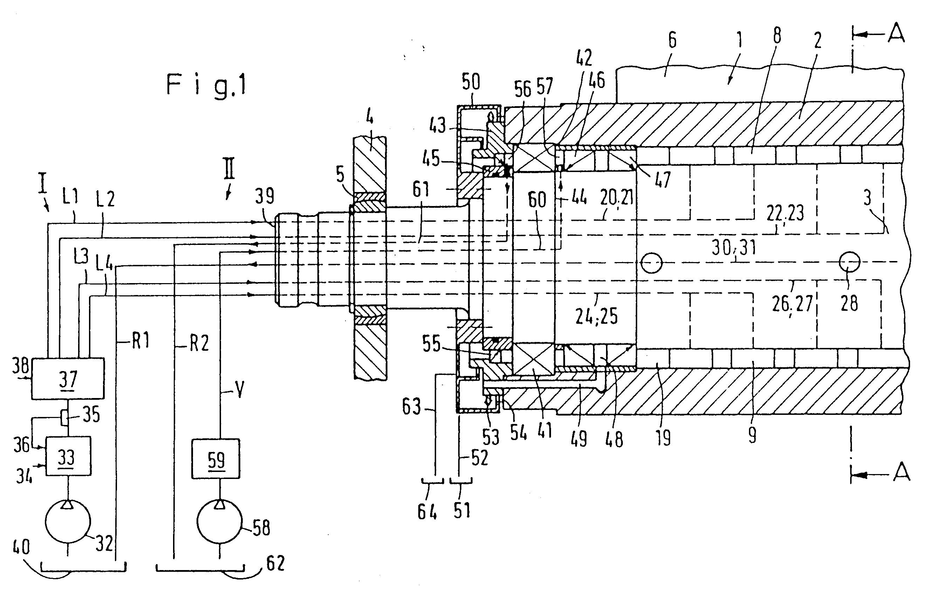

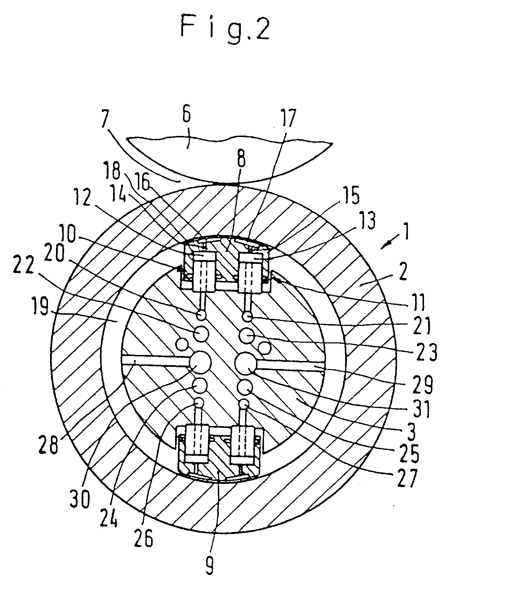

Die in Fig. 1 und 2 veranschaulichte Walze 1 weist einen hohlen Walzenmantel 2 auf, der um einen drehfest gehaltenen Träger 3 drehbar gelagert ist. Dieser ist an beiden Enden in einem Ständer 4 unter Zwischenschaltung eines sphärischen Lagers 5 gehalten. Der Walzenmantel wirkt mit einer Gegenwalze 6 zur Bildung eines Walzenspaltes 7 zusammen. In diesem Spalt kann Bahnenmaterial durch Druck und Temperatur behandelt werden, beispielsweise Papier oder sonstigtes Fasermaterial, Kunststoff, Textilen, Metallfolie, u.dgl.

Eine hydrostatische Lagervorrichtung wird von einer oberen Reihe von lasttragenden Lagerelementen 8 und einer unteren Reihe von stabilisierenden Lagerelementen 9 gebildet. Diese Lagerelemente haben einen einander ähnlichen Aufbau, so daß nachstehend lediglich ein lasttragendes Lagerelement 8 beschrieben wird. Es ist durch zwei Druckgeber 10 und 11 belastet, die in Umfangsrichtung versetzt angeordnet sind. Sie besitzen je einen Druckraum 12 bzw. 13, der jeweils zwischen einem am Träger 3 befestigten Kolben und einem im Lagerelement 8 vorgesehenen Zylinder gebildet ist. Die Druckräume sind je über einen Drosselkanal 14 bzw. 15 mit einer Lagertasche 16 bzw. 17 verbunden. Diese Lagertaschen stehen über einen Lagerspalt 18 zwischen der Lagerfläche und dem Innenumfang des Walzenmantels 2 mit dem Mantelinnenraum 19 in Verbindung.

Wenn dem Druckgeber 10 über eine Zuleitung 20 unter Druck stehende Arbeitsflüssigkeit zugeführt wird, ergibt sich im Druckraum 12 ein Druck, der das Lagerelement 8 gegen den Innenumfang des Walzenmantels 2 zu drücken versucht. Hierbei strömt die Druckflüssigkeit über die Drossel 14 in der Lagertasche 16 und von dort über den Lagerspalt 18 in den Innenraum 19. Infolgedessen ergibt sich in der Lagertasche 16 ein Zwischendruck und im Lagerspalt 18 ein kontinuierlich abnehmender Druck, wodurch der Walzenmantel 2 abgestützt wird.

Ähnliche Verhältnisse ergeben sich für den Druckgeber 11, dem Arbeitsflüssigkeit über die Zuleitung 21 zugeführt wird. Wie Fig. 1 zeigt, sind die Zuleitungen 20 und 21 im Träger 3 für eine erste Zone von zwei Lagerelementen 8 zuständig. Weitere Zuleitungen 22 und 23 führen zu einer weiteren Zone von Lagerelementen 8. Entsprechende Zuleitungen 24, 25, 26 und 27 führen zu den Lagerelement 9. Die sich im Innenraum 19 ansammelnde Arbeitsflüssigkeit wird über seitliche Ablaufkanäle 28 bzw. 29 und Rückleitungen 30 und 31 durch den Träger 3 nach außen geleitet.

Für die Arbeitsflüssigkeit ist ein Kreislauf I vorgesehen, der eine Druckpumpe 32 aufweist. Ihr ist eine Heizvorrichtung 33 nachgeschaltet, die in Abhängigkeit von einem am Eingang 34 eingestellten Sollwert und von einem mittels eines Fühlers 35 dem Eingang 36 zugeführten Istwert die Temperatur der Arbeitsflüssigkeit regelt. Es folgt eine Druckvorrichtung 37, die in Abhängigkeit von über einen Eingang 38 zugeführten Daten derart betätigt wird, daß die Walze 1 die gewünschte Durchbiegung besitzt. Von der Drucksteuervorrichtung gehen einzelne Zuleitungen, von denen nur schematisch Zuleitungen L1 bis L4 dargestellt sind, zu entsprechenden Anschlüssen an der Stirnseite 39 des Trägers, wo sie mit den Zuleitungen 20 bis 27 verbunden sind. Die Rückleitungen 30, 31 sind mit einer Rückleitung R1 verbunden, die zu einem Behälter 40 führt.

An den Enden ist der Walzenmantel 2 über je ein Wälzlager 41 auf dem Träger 3 gelagert. Der äußere Laufring des Wälzlagers ist zwischen einer Stufe 42 des Walzenmantels und einem am Mantel befestigten Flansch 43 eingespannt. Der innere Laufring ist zwischen einer Stufe 44 am Träger 3 und einer am Träger begestigten Hülse 45 eingespannt. Zwischen dem Mantelinnenraum 19 und dem Wälzlager 41 sind zwei Radialdichtungen 46 und 47 vorgesehen. Zwischen ihnen befindet sich ein Trennraum 48, der über einen Leckkanal 49 im Walzenmantel 2 mit der Stirnseite des Flansches 43 verbunden ist. Diese Stirnseite ist von einem Auffanggehäuse 50 umgeben, das einen zu einem Sammelbehälter 51 führenden Austrittsstutzen 52 besitzt. Ein Spritzring 53 genügt zur ausreichenden Abdichtung des Spaltes 54 zwischen Auffanggehäuse 50 und Flansch 43.

Zwischen dem Flansch 43 und der Hülse 45 ist eine Außendichtung 55 angeordnet. Zwischen ihr und dem Wälzlager 41 gibt es einen ersten Ringraum 56. Auf dessen anderer Seite gibt es einen durch die Dichtung 46 begrenzten zweiten Ringraum 57.

Ein Schmiermittel-Kreislauf II weist eine Förderpumpe 58 auf, die mit geringem Druck betrieben werden kann. Ihr ist eine Kühlvorrichtung 59 nachgeschaltet. Eine äußere Vorlaufleitung V führt zu einer inneren Vorlaufleitung 60 im Träger 3, die im Ringraum 57 mündet. Von Ringraum 56 geht eine Rücklaufleitung 61 im Träger 3 ab, die über eine äußere Rücklaufleitung R2 zu einem Behälterung 62 für das Schmiermittel führt. Ein weiterer Ablaufstutzen 63 in einem zweiten Teil des Auffanggehäuses 50 führt durch die Dichtung 55 austretendes Schmiermittel in einen Behälter 64.

Im Betrieb sind die beiden Kreisläufe I und II durch die Dichtungen 46 und 47 sicher voneinander getrennt. Eine eventuelle Leckage wird in den Behälter 51 abgeführt. Demzufolge können die Arbeitsflüssigkeit und das Schmiermittel hinsichtlich ihrer Temperatur völlig unterschiedlich behandelt werden. Insbesondere können auch völlig unterschiedlichen Medien benutzt werden. Es ist daher möglich, auf den Walzenmantel 2 höhere Wärmemengen als bisher zu übertragen und ihm so hohe Temperaturen zu verleihen, wie es bisher nicht möglich war.

Bei einem Ausführungsbeispiel wurde als Arbeitsmittel ein Thermalöl vom Typ Essotherm 650 und als Schmiermittel ein Getriebeöl vom Typ Mobil 634 benutzt. Die Zuführtemperature der Arbeitsflüssigkeit betrug 300°C. Die Walzentemperatur lag bei 280°C. Die Zuführtemperatur des Schmiermittels betrug 120°C.

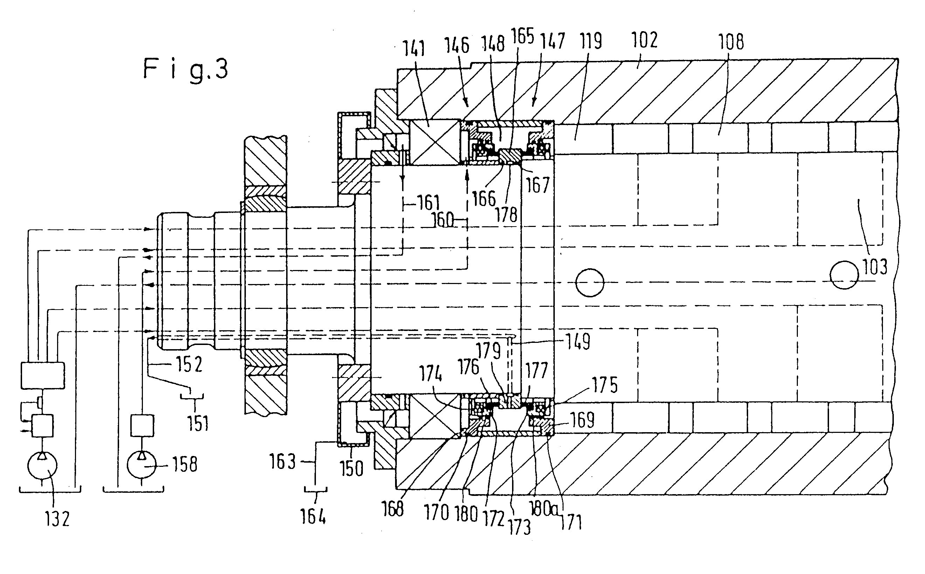

Bei der Ausführungsform nach Fig. 3 werden für entsprechende Teile um 100 gegenüber den Fig. 1 und 2 erhöhte Bezugszeichen verwendet. Bei dieser Abwandlung sind die Dichtungen 146 und 147 als stirnseitig abdichtende Gleitringdichtungen ausgebildet. Es gibt einen gemeinsamen ersten Stützring 165, der unter Zwischenschaltung zweier Dichtringe 166 und 167 am Träger 103 montiert ist. Jede Dichtung weist einen zweiten Stützring 168 bzw. 169 auf, der unter Zwischenschaltung, eines Dichtrings 170 bzw. 171 am Mantel 102 montiert ist. Ferner besitzt jede Dichtung einen Laufring 172 bzw. 173, der durch Federn 174 bzw. 175 in Axialrichtung belastet ist und mit stirnseitigen Dichtflächen 176 bzw. 177 gegen den ersten Stützring 165 gehalten wird. Außerdem ist der Laufring drehfest mit dem zweiten Stützring 168 bzw. 169 verbunden und wirkt mit diesem am Umfang über einen Dichtring 180 bzw. 180a zusammen. Beispielsweise kann der Stützring 165 aus Siliziumkarbid und die stirnseitige Dichtfläche 176 bzw. 177 aus Antimon imprägnierter Hartkohle bestehen.

Der erste Stützring 165 weist zwischen den beiden Dichtringen 166 und 167 eine Ringnut 178 auf. Diese steht über mindestens eine Radialbohrung 179 mit dem Trennraum 148 in Verbindung. Außerdem schließt eine im Innern des Trägers 103 vorgesehene Leckleitung 149 an diese Ringnut 178 an. Die Leckleitung führt zu einem stirnseitig angeschlossenen Austrittsstutzen 152. Infolge der Verwendung der Gleitringdichtungen 146 und 147 ist der Leckölaustritt minimal, d.h. während des Betriebes tritt überhaupt kein Öl aus und während der Aufheiz oder Abkühlphase ist höchstens mit einzelnen Öltropfen zu rechnen.

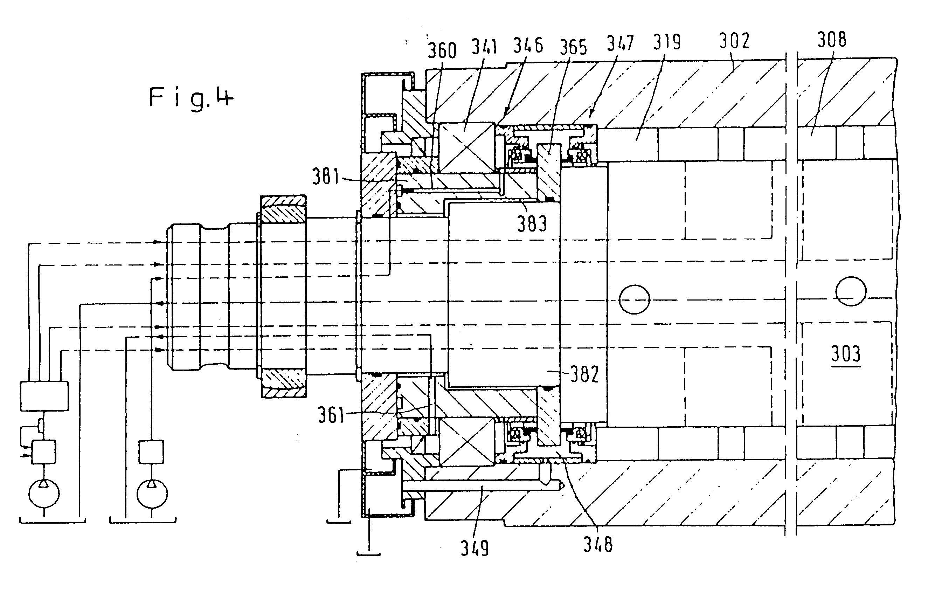

In Fig. 4 werden für entsprechende Teile erneut um 200 erhöhte Bezugszeichen verwendet. Unterschiedlich gegenüber Fig. 3 st im wesentlichen, daß das Wälzlager 341 auf einem Zwischenring 381 ruht, der einen Abschnitt 382 des Trägers 303 mit Spiel 383 umgibt und stirnseitig am radial nicht verschiebbaren Stützring 365 anliegt. Auf diese Weise ist eine radiale Verschiebbarkeit des Endes des Walzenmantels 302 mit Bezug auf den Träger 303 möglich. Eine solche Lagerung ist an sich beispielsweise aus DE-A-3325 385 bekannt. In diesem Fall wirken die Dichtungen 346 und 347 mit dem Zwischenring 381 statt mit dem Träger 303 zusammen. Der Leckkanal 349 führt über den Walzenmantel 302. Der Vorlaufkanal 360 geht über eine stirnseitige Ringnut und den Zwischenring 381. Der Rücklaufkanal verläuft durch den Zwischenring 381, das Spiel 383 und den Träger 303.

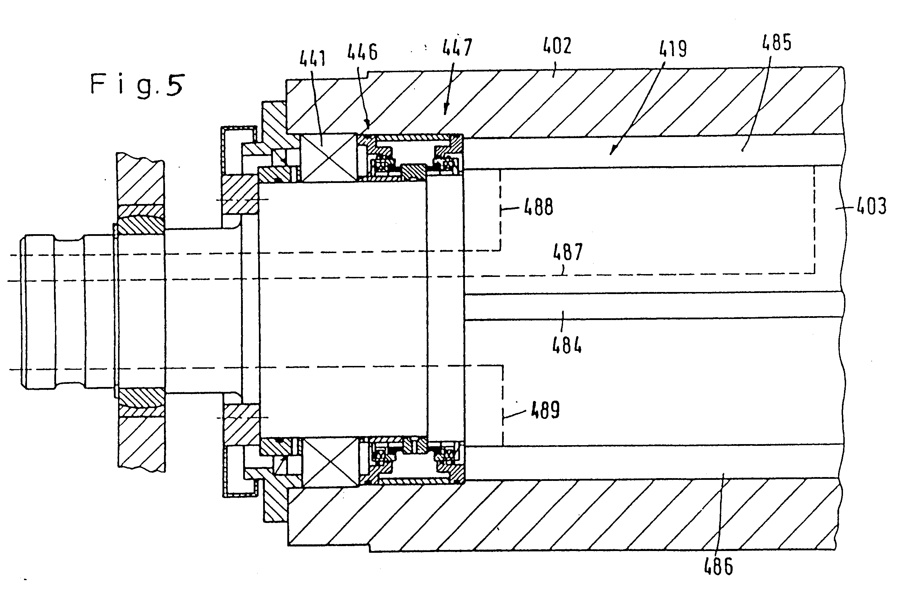

Bei der Ausführungsform nach Fig. 5 werden für entsprechende Teile erneut um 100 erhöhte Bezugszeichen verwendet. Diese Ausführungsform zeigt eine andere Form einer hydrostatischen Lagervorrichtung, die beispielsweise aus DE-A-3128 294 bekannt ist und als "schwimmende Lagerung" bezeichnet wird. Hier wird der Mantelinnenraüm 419 durch zwei sich etwa über die gesamte Breite der Walze erstreckende, einander diametral gegenüberliegende Dichtleisten 484 in zwei einander gegenüberliegende Räume 485 und 486 unterteilt, wobei der der Gegenwalze zugewandte Raum 485 mit unter Druck stehender Arbeitsflüssigkeit gefüllt ist. Zum Zweck der Beheizung wird diese Druckflüssigkeit fortwährend über Leitungen 487 zugeführt und über Leitungen 488 abgeführt. Das Lecköl aus dem Raum 486 wird über eine Leitung 489 abgeführt.

Es sind auch andere Arten der hydrostatischen Lagerung möglich, beispielsweise Kombinationen einer schwimmenden Lagerung gemäß Fig. 5 und einer Lagerung mit Lagerelementen gemäß den Fig. 1 bis 4. Die Lagerelemente können auch mit nur einem Druckgeber oder mit mehr als zwei Druckgebern versehen sein. Die Beheizung der Arbeitsflüssigkeit kann auch vor der Pumpe vorgenommen werden, beispielsweise im Behälter 40.

## Patentansprüche

1. Durchbiegungssteuerbare und beheizbare Walze, bei der ein Walzenmantel (2; 102; 302; 402) um einen festen Träger (3; 103; 303; 403) drehbar und auf diesem mittels einer im Mantelinnenraum (19; 119; 319; 419) angeordneten, hydrostatischen Lagervorrichtung (8; 108; 308; 408) abgestützt ist, die mit einer beheizten, unter Druck stehenden Arbeitsflüssigkeit versorgbar ist, und bei der die Enden des Walzenmantels mit Walzlagern (41; 141; 341; 441) zur Aufnahme von Axial- und/oder Radialkräften versehen sind, dadurch gekennzeichnet, daß die Walzlager (41; 141; 341; 441) gegenüber dem Mantelinnenraum (19; 119; 319; 419) abgedichtet und mit einem getrennt von der beheizten Arbeitsflüssigkeit zugeführten Schmiermittel versorgt sind, wobei die Dichtungen sowohl zum Mantelinnenraum als auch zu den Wälzenlagern hin abdichten und sich zwischen Mantelinnenraum (19; 119; 319) und jedem Wälzlager (41; 141; 341) zwei Dichtungen (46, 47; 146, 147; 346, 347) befinden, zwischen denen ein mit einem Leckkanal (49; 149; 349) verbundener Trennraum (48; 148; 348) angeordnet ist.

2. Walze nach Anspruch 1, dadurch gekennzeichnet, daß das Schmiermittel aus der gleichen Flüssigkeit wie die Arbeitsflüssigkeit besteht, aber unbeheizt ist.

3. Walze nach Anspruch 1, dadurch gekennzeichnet, daß die Arbeitsflüssigkeit aus einem auf über 250°C, vorzugsweise über 300°C erhitzbaren Thermalöl besteht.

4. Walze nach Anspruch 1 oder 3, dadurch gekennzeichnet, daß das Schmiermittel ein Getrie beöl ist.

5. Walze nach einem der Ansprüche 1 bis 4, dadurch gekennzeichnet, daß die Wälzlager (41) in einem Schmiermittel-Kreislauf (II) angeordnet sind.

6. Walze nach Anspruch 5, dadurch gekennzeichnet, daß der Schmiermittel-Kreislauf (II) eine Kühlvorrichtung (59) aufweist.

7. Walze nach einem der Ansprüche 1 bis 6, dadurch gekennzeichnet, daß sich jedes Wälzlager (41) zwischen zwei Ringräumen (56, 57) befindet, die auf ihren dem Wälzlager abgewandten Seiten je durch eine Dichtung (46, 55) begrenzt sind, und daß der eine Ringraum (57) mit einem Vorlaufkanal (60) und der andere Ringraum (56) mit einem Rücklaufkanal (61) für das Schmiermittel verbunden ist.

8. Walze nach einem der Ansprüche 1 bis 7, dadurch gekennzeichnet, daß zumindest ein Teil der Vor-, Rück-, und Leckkanäle (60, 61; 149, 160, 161; 349, 360, 361) im Träger (3; 103; 303) vorgesehen ist.

9. Walze nach einem der Ansprüche 1 bis 8, dadurch gekennzeichnet, daß die Leckkanäle (49) im Mantel (2) angeordnet und deren Mündungen außen von einem Auffangehäuse (50) umgeben sind.

10. Walze nach Anspruch 9, dadurch gekennzeichnet, daß das Auffangehäuse (50) mit einem mit dem Walzenmantel (2) umlaufenden Teil (43) nahe der Stirnseite einen Spalt (54) bildet und diesem ein Spritzring 53) vorgeschaltet ist.

11. Walze nach einem der Ansprüche 1 bis 10, dadurch gekennzeichnet, daß die Mantelinnenraum (19; 119; 319; 419) benachbarte Dichtung (47; 147; 347; 447) durch eine stirnseitig abdichtende Gleitringdichtung gebildet ist.

12. Walze nach Anspruch 11, dadurch gekennzeichnet, daß auch die zweite Dichtung (46; 146; 346; 446) zwischen Mantelinnenraum und Wälzlager durch eine stirnseitig abdichtende Gleitringdichtung gebildet ist.

13. Walze nach Anspruch 11 oder 12, dadurch gekennzeichnet, daß ein erster Stützring (165) unter Zwischenschaltung mindestens eines Dichtrings (166, 167) am drehfesten Teil (103) und ein zweiter Stützring (168, 169) unter Zwischenschaltung mindestens eines Dichtringes (170, 171) am Mantel (102) montiert ist und daß ein Laufring (172, 173) in Axialrichtung durch Federkraft belastet und mit einer stirnseitigen Dichtfläche (176, 177) gegen den einen Stützring gehalten ist sowie am Umfang unter Zwischenschaltung mindestens eines Dichtringes (176, 177) mit dem zweiten Stützring zusammenwirkt und mit diesem auf Drehmitnahme gekuppelt ist.

14. Walze nach Anspruch 13, dadurch gekennzeichnet, daß der mit der stirnseitigen Dichtfläche (176, 177) des Laufringes (172, 173) zusammenwirkende Stützring (165) zwischen zwei Dichtringen (166, 167) eine Ringnut (178) aufweist, die einerseits über mindestens eine Bohrung (179) im Stützring mit dem Trennraum (148) und andererseits mit dem Leckkanal (149) in Verbindung steht.

## Claims

1. Roll, which can be heated and whose bending can be controlled, in which a roll shell (2; 102; 302; 402) is rotatably supported around a rigid carrier (3; 103; 303; 403) and is supported on the latter by means of a hydrostatic bearing device (8; 108; 308; 408) arranged in the internal space of the shell (19; 119; 319; 419), which bearing device can be supplied with a heated working fluid under pressure, and in which the ends of the roll shell are provided with rolling bearings (41; 141; 341; 441) for accepting axial and/or radial forces, characterised in that the rolling bearings (41; 141; 341; 441) are sealed against the internal space of the shell (19; 119; 319; 419) and are supplied with a lubricant fed in separately from the heated working fluid, the seals sealing both towards the internal space of the shell and towards the rolling bearings, and there being two seals (46, 47; 146, 147; 346, 347) between the internal space of the shell (19; 119; 319) and each rolling bearing (41; 141; 341), between which seals a separation space (48; 148; 348) connected to a leakage duct (49; 149; 349) is arranged.

2. Roll according to Claim 1, characterised in that the lubricant consists of the same fluid as the working fluid but is unheated.

3. Roll according to Claim 1, characterised in that the working fluid consists of a thermal oil which can be heated to above 250°C, preferably above 300°C.

4. Roll according to Claim 1 or 3, characterised in that the lubricant is a gear oil.

5. Roll according to one of Claims 1 to 4, characterised in that the rolling bearings (41) are arranged in a lubricant circuit (II).

6. Roll according to Claim 5, characterised in that the lubricant circuit (II) has a cooling device (59).

7. Roll according to one of Claims 1 to 6, characterised in that each rolling bearing (41) is located between two annular spaces (56, 57), each of which is bounded on its side remote from the rolling bearing by a seal (46, 55), and in that one annular space (57) is connected to a supply duct (60) for the lubricant, and the other annular space (56) is connected to a return duct (61) for the lubricant.

8. Roll according to one of Claims 1 to 7, characterised in that at least a part of the supply, return and leakage ducts (60, 61; 149, 160, 161; 349, 360, 361) is provided in the carrier (3; 103; 303).

9. Roll according to one of Claims 1 to 8, characterised in that the leakage ducts (49) are arranged in the shell (2) and in that their outlets are surrounded on the outside by a collector casing (50).

10. Roll according to Claim 9, characterised in that the collector casing (50) forms, together with a part (43) surrounding the roll shell (2), a gap (54) near the end surface, and in that a sharp-edged ring (53) is fitted upstream of this gap.

11. Roll according to one of Claims 1 to 10, characterised in that the seal (47; 147; 347; 447) adjacent the internal space of the shell (19; 119; 319; 419) is formed by an end-face-sealing rotating mechanical seal.

12. Roll according to Claim 11, characterised in that the second seal (46; 146; 346; 446) between the internal space of the shell and the rolling bearing is also formed by an end-face-sealing rotating mechanical seal.

13. Roll according to Claim 11 or 12, characterised in that a first support ring (165) is mounted on the rotationally stationary part (103), with at least one sealing ring (166, 167) fitted between, and a second support ring (168, 169) is mounted on the shell (102), with at least one sealing ring (170, 171) fitted between, and in that a race (172, 173) is loaded by spring force in the axial direction and is held by an end-face sealing surface (176, 177) against one support ring and interacts at the periphery with the second support ring, with at least one sealing ring (176, 177) fitted between, and is connected to this second support ring for rotational drive.

14. Roll according to Claim 13, characterised in that the support ring (165) interacting with the end-face sealing surface (176, 177) of the race (172, 173) has an annular groove (178) between two sealing rings (166, 167), which annular groove is connected, on the one hand, to the separation space (148) via at least one hole (179) in the support ring and, on the other hand, to the leakage duct (149).

## Revendications

1. Cylindre chauffé à flexion compensée dans lequel une enveloppe de cylindre (2 ; 102 ; 302 ; 402) est montée à rotation autour d'un support fixe (3 ; 103 ; 303 ; 403) en s'appuyant sur celui-ci au moyen d'un dispositif d'appui hydrostatique (8 ; 108 ; 308 ; 408) disposé dans le volume intérieur de l'enveloppe (19 ; 119 ; 319 ; 419), ce cylindre pouvant être alimenté par un liquide de travail sous pression chauffé, les extrémités de l'enveloppe de cylindre étant munies de paliers à roulement (41 ; 141 ; 341 ; 441) pour absorber les forces axiales et/ou radiales, caractérisé en ce que les paliers à roulement (41 ; 141 ; 341 ; 441) sont rendus étanches par rapport au volume intérieur de l'enveloppe (19 ; 119 ; 319 ; 419), ces paliers étant alimentés avec un lubrifiant envoyé séparément du liquide de travail chauffé, les éléments d'étanchéité assurant l'étanchéité aussi bien vis-à-vis du volume intérieur de l'enveloppe que des paliers à roulement et que deux éléments d'étanchéité (46, 47 ; 146, 147, 346, 347) se trouvent entre le volume intérieur de l'enveloppe (19 ; 119 ; 319) et chaque palier à roulement (41 ; 141 ; 341), une chambre de séparation (48 ; 148 ; 348) reliée à un conduit de fuite (49 ; 149 ; 349) étant disposée entre ces deux éléments.

2. Cylindre selon la revendication 1, caractérisé en ce que le lubrifiant est constitué du même liquide que le liquide de travail, mais n'est pas chauffé.

3. Cylindre selon la revendication 1, caractérisé en ce que le liquide de travail est constitué d'une huile thermique pouvant être chauffée à plus de 250°C et, de préférence, à plus de 300°C.

4. Cylindre selon la revendication 1 ou 3, caractérisé en ce que le lubrifiant est une huile à engrenages.

5. Cylindre selon l'une des revendications 1 à 4, caractérisé en ce que les paliers à roulement (41) sont disposés dans un circuit de lubrifiant (II).

6. Cylindre selon la revendication 5, caractérisé en ce que le circuit de lubrifiant (II) comporte un dispositif de refroidissement (59).

7. Cylindre selon l'une des revendications 1 à 6, caractérisé en ce que chaque palier à roulement (41) se trouve entre deux volumes annulaires (56, 57), chacun d'eux étant limité par un élément d'étanchéité (46, 55) du côté situé à l'opposé du palier à roulement, et en ce que l'un (57) des volumes annulaires est relié à un conduit d'amenée de lubrifiant (60), tandis que l'autre volume annulaire (56) est relié à un conduit de retour de lubrifiant (61).

8. Cylindre selon l'une des revendications 1 à 7, caractérisé en qu'au moins une partie des conduits d'amenée de retour et de fuite (60, 61 ; 149, 160, 161 ; 349, 360, 361) est prévue dans le support (3 ; 103 ; 303).

9. Cylindre selon l'une des revendications 1 à 8, caractérisé en ce que les conduits de fuite (49) sont disposés dans l'enveloppe (2), leurs embouchures étant entourées extérieurement par un carter collecteur (50).

10. Cylindre selon la revendication 9, caractérisé en ce que le carter collecteur (50) forme un intervalle (54) avec un élément (43) tournant avec l'enveloppe de cylindre (2) à proximité de la face d'extrémité, un anneau de projection (53) étant monté devant cet intervalle.

11. Cylindre selon l'une des revendications 1 à 10, caractérisé en ce que l'élément d'étanchéité (47 ; 147 ; 347 ; 447) voisin du volume intérieur de l'enveloppe (19 ; 119 ; 319 ; 419) est constitué d'une bague d'étanchéité à glissement assurant l'étanchéité par sa face frontale.

12. Cylindre selon la revendication 11, caractérisé en ce que le second élément d'étanchéité (46 ; 146 ; 346 ; 446) entre le volume intérieur de l'enveloppe et les paliers à roulement est aussi constitué d'une bague d'étanchéité à glissement assurant l'étanchéité par sa face frontale.

13. Cylindre selon la revendication 11 ou 12, caractérisé en ce qu'une première couronne d'appui (165) est montée sur l'élément non tournant (103) avec interposition d'au moins une bague d'étanchéité (166, 167), une seconde couronne d'appui (168, 169) étant montée sur l'enveloppe (102) avec interposition d'au moins une bague d'étanchéité (170, 171) et en ce qu'une couronne de roulement (172, 173) est chargée en direction axiale par une force de ressort et maintenue par une surface d'étanchéité frontale (176, 177) contre la première couronne d'appui, en coopérant sur son pourtour, avec interposition d'au moins une bague d'étanchéité (176, 177), avec la seconde couronne d'appui et en étant accouplée avec celle-ci pour l'entraînement en rotation.

14. Cylindre selon la revendication 13, caractérisé en ce que la couronne d'appui (165), coopérant avec la surface d'étanchéité frontale (176, 177) de la couronne de roulement (172, 173), comporte une rainure annulaire (178) entre deux bagues d'étanchéité (166, 167), cette rainure étant en communication, d'une part, avec la chambre de séparation (148) par au moins un trou (179) de la couronne d'appui et, d'autre part, avec le conduit de fuite (149).
